# EUROPEAN PATENT SPECIFICATION

(11) **EP 0 346 900 B1**
(45) Date of publication and mention of the grant of the patent: **05.01.1994**
(21) Application number: 89110888.8
(22) Date of filing: 15.06.1989
(51) Int. Cl.: B29C 45/27

(54) **Injection molding system with insertable insulating ring**
Spritzgiesssystem mit einsetzbarem Isolierring
Système de moulage par injection avec anneau d'isolation insérable

(30) Priority: 17.06.1988 CA 569756
(43) Date of publication of application: 20.12.1989
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- US-A- 4 053 271
- US-A- 4 773 154
- US-A- 4 795 338

## Description

### BACKGROUND OF THE INVENTION

This invention relates to injection molding and more particularly to an injection molding system having reduced heat loss from a heated nozzle to the surrounding cooled mold.

In this type of system, the heated nozzle is securely seated in a well in the cooled mold. As shown for instance, in the applicant's U.S. patent no. 4,557,685 entitled "Heated Nozzle for Injection Molding Apparatus" which issued December 10, 1985, the nozzle has an insulation bushing which seats against a shoulder to locate the nozzle with an insulative air space between it and the surrounding mold. As is well known, it is critical to the successful operation of the system that the temperature of the melt be maintained within a predetermined narrow temperature range as it flows through the heated nozzle. However, it has been found that previous nozzles of this type suffer greater temperature drop at their ends than in the middle which makes a uniform temperature difficult to achieve. One attempt to deal with this problem is to increase the pitch of the helical heating element in the middle as shown, for instance, in the applicant's Canadian patent application serial number 549,519 filed October 16, 1987 entitled "Injection Molding Nozzle with Resilient Sealing and Locating Flange".

Canadian application serial number 549,519 relates to a nozzle having a circumferential sealing and locating flange which extends across the insulative air space and abuts against the surrounding inner surface of the well in the cooled mold. As will be appreciated, this necessarily results in heat loss from the heated nozzle to the cooled mold. The applicant's Canadian patent application serial number 557,681 filed January 29, 1988 entitled "Improved Mounting for Injection Molding Nozzle" discloses reducing this problem by machining a circumferential groove in the cavity plate to form a thin wall portion against which the sealing and locating flange abuts. While this arrangement is a substantial improvement, it has the disadvantage of being relatively difficult to machine and still results in considerable heat loss from the nozzle.

### SUMMARY OF THE INVENTION

Accordingly, it is an object of the invention to at least partially overcome the disadvantages of the prior art by providing a cylindrical insulating ring which seats in the mold for the sealing and locating flange to abut against.

To this end, in one of its aspects, the invention provides an injection molding system having an elongated heated nozzle with a forward end and a rear end seated in a well in a cooled mold with minimal contact bridging an insulative air space provided between the heated nozzle and the surrounding cooled mold, the nozzle having a central portion with a generally cylindrical outer surface extending between a collar portion adjacent the rear end and a nose portion adjacent the forward end, the nozzle having a melt bore extending from a central inlet at the rear end through the central portion and the nose portion to convey pressurized melt from the inlet towards at least one gate extending from the well to a cavity, the nozzle having an electrically insulated heating element with a spiral portion which extends integrally in the central portion around the melt bore, the nozzle having a circumferential sealing and locating flange which extend outwardly between the central portion and the nose portion to bridge the insulative air space around the nozzle, the improvement wherein: a cylindrical insulating ring having an inner surface, and an outer surface is seated in a circumferential seat in the mold in a position whereby the outwardly extending flange of the nozzle is in sealing contact with the inner surface of the ring, the seat in the mold having a cylindrical inner surface and the outer surface of the ring having at least one circumferential groove to form an insulating air space between the outer surface of the ring and the inner surface of the seat in the mold.

Further objects and advantages of the invention will appear from the following description taken together with the accompanying drawings.

### BRIEF DESCRIPTION OF THE DRAWINGS

Figure 1 is a sectional view of a portion of an injection molding system according to a preferred embodiment of the invention, and
Figure 2 is an isometric view of the insulating ring shown in Figure 1.

### DETAILED DESCRIPTION OF THE DRAWINGS

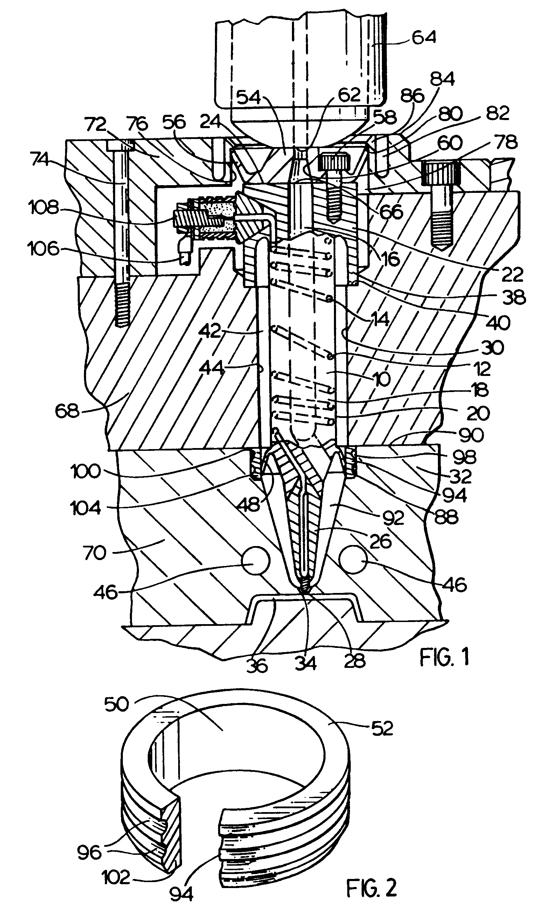

Reference is first made to Figure 1 which shows a single nozzle sprue gated injection molding system according to a preferred embodiment of the invention. The elongated nozzle 10 has an integral electrical heating element 12 which is brazed in with a spiral portion 14 extending around a melt bore 16 as described in the applicant's Canadian patent application serial number 549,517 filed October 16, 1987 entitled "Injection Molding Nozzle Having Grounded Heating Element Brazed into Pointed Tip". The nozzle 10 has a central portion 18 with a generally cylindrical outer surface 20 extending between a collar portion 22 adjacent the rear end 24 and a tapered nose portion 26 extending to the forward end 28. The nozzle 10 is seated in a well 30 in the mold 32 with the forward end 28 in alignment with a gate 34 extending from the well 30 to a cavity 36. The collar portion 22 forms an insulation bushing 38 which seats against a shoulder 40 to support the nozzle 10 in a position wherein an insulative air space 42 is provided between the heated nozzle 10 and the inner surface 44 of the surrounding mold which is cooled by water flowing through cooling conduits 46. The nozzle 10 also has an integral circumferential sealing and locating flange 48 which extends outwardly between the central portion 18 and the nose portion 26 as described in the applicant's Canadian patent application 549,519, referred to above. This flange 48 extends across the air space 42 and abuts against the inner surface 50 of a cylindrical insulating ring 52 which is seated in the mold 32 as described in more detail below to provide a seal against the leakage of pressurized melt and to accurately align the forward end 28 of the nozzle 10 with the gate 34.

As described in the applicant's Canadian patent application serial number 557,681 referred to above, a backplate 54 having a relatively thin flanged portion 56 is secured to the rear end 24 of the nozzle 10 by bolts 58. The backplate has a central bore 60 which is in alignment with an outlet 62 from the molding machine nozzle 64 and an inlet 66 to the melt bore 16 through the nozzle 10. As is well known, the mold can be made with a variety of different components and plates depending upon the desired shape of the cavity 36. In the present case, the mold has a support plate 68 which is secured between a cavity plate 70 and a circular retaining collar 72 which is secured to it by bolts 74 in a conventional manner. As can be seen, the retaining collar 72 has a central opening 76 therethrough which receives the rear end 24 of the nozzle 10 and the backplate 54 bolted to it. The opening 76 is sufficiently larger in diameter than the rear end 24 of the nozzle 10 to provide an insulative air space 78 between them. The flanged portion 56 of the backplate 54 extends outwardly and rearwardly across the air space 78 and abuts against a shoulder 80 which extends inwardly from the retaining collar 72. Thus, when the system is assembled and the collar 72 is bolted tightly into the position shown, it engages the flanged portion 56 of the backplate 54 and holds the nozzle 10 securely in place in the well 30. Although the backplate 54 and the retaining collar 72 are made of steel, it will be appreciated that the relatively thin shape of the flanged portion 56 of the backplate 54 results in substantially less heat loss than if the retaining collar 72 abuts directly against the rear end 24 of the nozzle. In order to further reduce heat loss through the flanged portion 56, a deep circumferential groove 82 is machined in the rear face 84 of the retaining collar 72. This provides a thin wall portion 86 having the shoulder 80 against which the flanged portion 56 of the backplate 54 abuts.

In order to reduce similar heat loss from the nozzle 10 through the sealing and locating flange 48, a cylindrical insulating ring 52 is received in a seat 88 which extends from the rear face 90 of the cavity plate 70. The insulating ring 52 has a cylindrical inner surface 50 against which the sealing and locating flange 48 abuts during use. The flange 48 is made of resilient metal whereby the force of the pressurized melt in the space 92 around the nose portion 26 forces it into tight sealing contact against the inner surface 50 of the insulating ring 52 which prevents escape of the pressurized melt into the insulative air space 42 surrounding the central portion 18 of the nozzle 10. As can be seen, in this embodiment of the invention, the outer surface 94 of the insulating ring 52 has two spaced circumferentially extending grooves 96, each of which provides an insulating air space 98 between the outer surface 94 of the insulating ring 52 and the cylindrical inner surface 100 of the seal 88 in the cooled cavity plate. In addition, the insulating ring 52 has a beveled outer corner 102 which provides another insulating air space 104. Thus, surface contact between the insulating ring 52 and the cavity plate is reduced considerably which reduces heat loss. Furthermore, the insulating ring 52 is made of a relatively poor heat conductive metal such as a titanium alloy which further reduces heat loss.

In use, after the injection molding system has been assembled as shown and described above, electrical power is applied to the heating element 12 by a lead 106 connected to the cold terminal 108 to heat the nozzle 10 to a predetermined operating temperature. Pressurized melt is then introduced from the outlet 62 of the molding machine nozzle 64 through the central bore 60 of the backplate 54 and into the melt bore 16 of the nozzle 10. The pressurized melt flows through the nozzle 10 into the space 92 surrounding the heated nose portion 26 of the nozzle 10 and then through the gate 34 into the cavity 32. The space 92 remains filled with melt, a portion of which solidifies adjacent the cooled cavity plate 70 and the sealing and locating flange 48, preventing it escaping into the insulative air space 42. After the cavities are filled, injection pressure is held momentarily to pack and then released. After a short cooling period, the mold is opened to eject the molded products. After ejection, the mold is closed and injection pressure is reapplied to refill the cavity 34. This cycle is continuously repeated with a frequency dependent on the size and shape of the cavity and the type of material being molded.

It is apparent that the insulating ring 52 can have other configurations and be made of other suitable materials which reduce heat loss from the nozzle 10 through the sealing and locating flange 48. Although a single nozzle system has been shown and described, it is apparent that the invention applies to a multi-nozzle injection molding system as well.

## Claims

1. An injection molding system having an elongated heated nozzle (10) with a forward end (28) and a rear end (24), said nozzle being seated in a well (30) in a cooled mold (32) with minimal contact bridging an insulative air space (42) provided between the heated nozzle (10) and the surrounding cooled mold (32), the nozzle (10) having a central portion (18) with a generally cylindrical outer surface (20) extending between a collar portion (22) adjacent the rear end (24) and a nose portion (26) adjacent the forward end (28), the nozzle (10) having a melt bore (16) extending from a central inlet (66) at the rear end through the central portion and the nose portion (26) to convey pressurized melt from the inlet towards at least one gate extending from the well (30) to a cavity (36), the nozzle having an electrically insulated heating element (12) with a spiral portion (14) which extends integrally in the central portion (18) around the melt bore (16), the nozzle (10) having a circumferential sealing and locating flange (48) which extends outwardly between the central portion (18) and the nose portion (26) to bridge the insulative air space (42) around the nozzle (10), characterized in that,
a cylindrical insulating ring (52) having an inner surface (50), and an outer surface (94) is seated in a circumferential seat (88) in the mold (32) in a position whereby the outwardly extending flange (48) of the nozzle (10) is in sealing contact with the inner surface (50) of the ring (52), the seat in the mold having a cylindrical inner surface (100) and the outer surface (94) of the ring having at least one circumferential groove (96) to form an insulating air space (98) between the outer surface (94) of the ring (52) and the inner surface (100) of the seat (88) in the mold.

2. A system as claimed in claim 1 wherein the outer surface (94) of the insulating ring (52) has a plurality of spaced circumferential grooves (96).

3. A system as claimed in claim 2 wherein the insulting ring (52) is made of a titanium alloy.

4. A system as claimed in claim 3 wherein the inner surface (50) of the insulating ring (52) is cylindrical.

5. A system as claimed in claim 4 wherein the mold includes a support plate (68) which abuts against a cavity plate (70) with the well (30) which receives the nozzle (10) extending through the support plate (68) into the cavity plate (70), the seat (88) which receives the insulating ring (52) being formed in the cavity plate (70) adjacent the support plate (68).

## Patentansprüche

1. Spritzgießsystem mit einer langgestreckten, beheizten Düse (10) mit einem vorderen Ende (28) und einem hinteren Ende (24), wobei die Düse in einer Bohrung (30) in einer gekühlten Form (32) eingesetzt ist, mit minimalem Kontakt, der einen isolierenden Luftraum (42), vorgesehen zwischen der beheizten Düse (10) und der umgebenden, gekühlten Form (32), überbrückt, wobei die Düse (10) einen Mittelabschnitt (18) mit einer im wesentlichen zylindrischen Außenoberfläche (20) aufweist, die sich zwischen einem Kragenabschnitt (22), benachbart zu dem hinteren Ende (24), und einem Nasenabschnitt (26), benachbart zu dem vorderen Ende (28), erstreckt, wobei die Düse (10) eine Schmelzebohrung (16) aufweist, die sich von einem zentralen Einlaß (66) am hinteren Ende durch den Mittelabschnitt und den Nasenabschnitt (26) erstreckt, um unter Druck stehende Schmelze von dem Einlaß in Richtung zu zumindest einem Anschnitt, der sich von der Bohrung (30) zu einem Formhohlraum (36) erstreckt, zu fördern, wobei die Düse ein elektrisch isoliertes Heizelement (12) mit einem Spiralabschnitt (14) aufweist, der sich integral in dem Mittelabschnitt (18) rund um die Schmelzebohrung (16) erstreckt, und die Düse einen Umfangsdicht- und Positionierflansch (48) aufweist, der sich zwischen dem Mittelabschnitt (18) und dem Nasenabschnitt (26) nach außen erstreckt, um den isolierenden Luftraum (42) rund um die Düse (10) zu überbrücken, **dadurch gekennzeichnet,** daß ein zylindrischer Isolierring (52), der eine Innenoberfläche (30) und eine Außenoberfläche (94) aufweist, in einen Umfangssitz (88) in der Form (32) eingesetzt ist, in einer Position, wodurch der sich nach außen erstreckende Flansch (48) der Düse (10) in Dichtungskontakt mit der Innenoberfläche (30) des Ringes (52) ist, der Sitz in der Form eine zylindrische Innenoberfläche (100) und die Außenoberfläche (94) des Ringes zumindest eine Umfangsnut (96) aufweist, um einen isolierenden Luftraum (98) zwischen der Außenoberfläche (94) des Ringes (52) und der Innenoberfläche (100) des Sitzes (88) in der Form zu bilden.

2. System nach Anspruch 1, bei dem die Außenoberfläche (94) des Isolierringes (52) eine Mehrzahl von beabstandeten Umfangsnuten (96) aufweist.

3. System nach Anspruch 2, bei dem der Isolierring (52) aus einer Titanlegierung besteht.

4. System nach Anspruch 3, bei dem die Innenoberfläche (30) des Isolierringes (52) zylindrisch ist.

5. System nach Anspruch 4, bei dem die Form eine Lagerungsplatte (68) enthält, die gegen eine Formhohlraumplatte (70) mit der Bohrung (30) anliegt, die die Düse (10) aufnimmt, die sich durch die Lagerungsplatte (68) in die Formhohlraumplatte (70) erstreckt, wobei der Sitz (88), der den Isolierring (52) aufnimmt, in der Formhohlraumplatte (70) benachbart zu der Lagerungsplatte (68) angeordnet ist.

## Revendications

1. Système de moulage par injection présentant une buse chauffée (10) allongée pourvue d'une extrémité avant (28) et d'une extrémité arrière (24), ladite buse étant logée dans un puits (30) ménagé dans un moule refroidi (32), un contact minimal produisant un pontage sur un espace d'air isolant (42) prévu entre la buse chauffée (10) et le moule refroidi (32) environnant, la buse (10) présentant une partie centrale (18) pourvue d'une surface extérieure (20) globalement cylindrique, s'étendant entre une partie de bague (22) adjacente à l'extrémité arrière (24) et une partie de bec (26) adjacente à l'extrémité avant (28), la buse (10) présentant un alésage de produit en fusion (16) s'étendant depuis une entrée centrale (66) située à l'extrémité arrière, par l'intermédiaire de la partie centrale et la partie de bec (26), pour acheminer un produit en fusion pressurisé depuis l'entrée, vers au moins une porte s'étendant depuis le puits (30), en direction d'une cavité (36), la buse présentant un élément de chauffage (12) isolé de l'électricité, pourvu d'une partie hélicoïdale (14) qui s'étend d'un seul tenant dans la partie centrale (18), autour de l'alésage de produit en fusion (16), la buse (10) présentant une bride d'étanchéité et de positionnement (48) circonférentielle, qui s'étend vers l'extérieur, entre la partie centrale (18) et la partie de bec (26), pour effectuer un pontage sur l'espace d'air isolant (42) situé autour de la buse (10), caractérisé en ce que :
une bague isolante (52) cylindrique présente une surface intérieure (50) et une surface extérieure (94) est logée dans un siège circonférentiel (88) présent dans le moule (32), dans une position telle que la bride (48) s'étendant vers l'extérieur de la buse (10) se situe en contact étanche avec la surface intérieure (50) de la bague (52), le siège présent dans le moule présentant une surface intérieure cylindrique (100) et la surface extérieure (94) de la bague présentant au moins une gorge circonférentielle (96), pour former un espace d'air isolant (98) entre la surface extérieure (94) de la bague (52) et la surface intérieure (100) du siège (88) situé dans le moule.

2. Système selon la revendication 1, dans lequel la surface extérieure (94) de la bague isolante (52) présente une pluralité de gorges circonférentielles (96) espacées.

3. Système selon la revendication 2, dans lequel la bague isolante (52) est réalisée en alliage de titane.

4. Système selon la revendication 3, dans lequel la surface intérieure (50) de la bague isolante (52) est cylindrique.

5. Système selon la revendication 4, dans lequel le moule comprend une plaque de support (68) qui butte contre une plaque à cavité (70), le puits (30) qui reçoit la buse (10) traversant la plaque de support (68) pour aller dans la plaque à cavité (70), le siège (88) qui reçoit la bague isolante (52) étant formé dans la plaque à cavité (70), de façon adjacente à la plaque de support (68).
